# EUROPÄISCHE PATENTSCHRIFT

(11) **EP 1 368 387 B1**
(45) Veröffentlichungstag und Bekanntmachung des Hinweises auf die Patenterteilung: **09.02.2005**
(21) Anmeldenummer: 02714099.5
(22) Anmeldetag: 23.01.2002
(51) Int. Cl.: C08F 8/36, C08G 83/00, A01N 25/28

(54) **MIKROVERKAPSELTE BIOLOGISCH AKTIVE WIRKSTOFFE ENTHALTEND EIN WASSERLÖSLICHES ODER WASSERDISPERGIERBARES KAMMPOLYMER**
MICROENCAPSULATED BIOLOGICALLY ACTIVE SUBSTANCES THAT CONTAIN A WATER-SOLUBLE OR WATER-DISPERSIBLE COMB POLYMER
SUBSTANCES BIOLOGIQUEMENT ACTIVES MICROENCAPSULEES CONTENANT UN POLYMERE GREFFE SOLUBLE DANS L'EAU OU DISPERSABLE DANS L'EAU

(30) Priorität: 03.02.2001 DE 10104991
(43) Veröffentlichungstag der Anmeldung: 10.12.2003
(73) Patentinhaber: Clariant GmbH, 65929 Frankfurt am Main (DE)
(72) Erfinder: ZERRER, Ralf, 63791 Karlstein (DE); MORSCHHÄUSER, Roman, 55122 Mainz (DE)
(74) Vertreter: Paczkowski, Marcus, Dr.
(86) Internationale Anmeldenummer: PCT/EP2002/000615
(87) Internationale Veröffentlichungsnummer: WO 2002/062856

(56) Entgegenhaltungen:
- EP-A- 1 035 194
- WO-A-00/53009
- WO-A-99/52560
- DE-A- 19 909 757
- US-A- 4 282 130
- US-A- 4 741 956

## Beschreibung

Aus wirtschaftlichen und ökologischen Gründen ist die kontrollierte Freigabe biologisch aktiver Wirksubstanzen für die Agrarindustrie ein wesentliches Ziel. Durch Mikroverkapselung der Wirksubstanzen wird dabei erreicht, dass die für die biologische Aktivität erforderliche Konzentration am Wirkort über einen längeren Zeitraum hinweg konstant gehalten werden kann, die Stabilität der Substanzen verbessert, Umweltbelastungen vermindert, die akute Toxizität der Mittel verringert, sowie Unverträglichkeiten mit anderen Bestandteilen der Formulierung umgangen werden.

Es sind unterschiedliche Techniken zur Mikroverkapselung von Substanzen bekannt. Das zugrundeliegende Prinzip ist, einen wasserunlöslichen oder wasserlöslichen biologische aktiven Wirkstoff, beispielsweise Akarizide, Bakterizide, Fungizide, Herbizide, Insektizide, Molluskide, Nematizide und Rodentizide oder wasserunlösliche bzw. wasserlösliche Mischungen, enthaltend einen biologisch aktiven Wirkstoff mit einem Polymer, beispielsweise einem Polyharnstoff, Polyurethan, Polyacrylat, Polyester etc. zu umhüllen.

In US 4 285 720 ist die Mikroverkapselung von mit Wasser nicht mischbaren Substanzen beschrieben. Die Kapselwand besteht hier aus einem Polyharnstoff, der aus einem Polyisocyanat gebildet wird.

In WO 99/11122 wird ein Verfahren zur Mikroverkapselung eines wasserunlöslichen Herbizides beschrieben, wobei man eine Mischung aus Triisocyanaten, Diisocyanaten und einem wasserunlösliche Herbizid in einer wässrigen Lösung, enthaltend ein Kolloid, dispergiert, der Öl-in-Wasser Emulsion ein niedermolekulares Polyamin zusetzt und bei Temperaturen oberhalb von 40°C polymerisiert, wobei sich eine Hülle um den Wirkstoff bildet.

In WO 98/28975 wird ein Verfahren zur Mikroverkapselung wasserlöslicher Wirkstoffe beschrieben, wobei man eine Harnstoff Formaldehyd-Mischung und/oder ein Melaminformaldehyd, Präpolymere und einen wasserlöslichen Wirkstoff in einer kontinuierlichen organischen Phase bestehend aus einem oder mehreren organischen Lösungsmitteln und einem oder mehreren Emulgatoren dispergiert.
Bei Temperaturen von 20 bis 100°C kommt es an der Grenzschicht der Phasen zur Kondensation der Präpolymere, die in der wässrigen Phase enthalten sind, in Gegenwart von oberflächenaktiven Protonengebern, die in der organischen Phase löslich sind aber in der wässrigen Phase nur geringfügig löslich, zur Ausbildung einer festen Kapselwand, die die wässrigen Tröpfchen umgibt.

Es wurde nun gefunden, dass sich wasserlösliche und/oder wasserdispergierbare Kammpolymere, bestehend aus einer Polyacrylsäure enthaltenden Polymerhauptkette und sulfonhaltigen Polyester-Seitenketten hervorragend als Schutzkolloide in Mikroverkapselungsprozessen durch "in-situ-Polymerisation" eignen. Während übliche Polyester nicht genügend Flexibilität aufweisen um als Schutzkolloide eingesetzt zu werden, erlauben Kammpolymere mit ihrer variablen physikalischen Charakteristik und teilweise filmbildenden Eigenschaften ihren Einsatz als Schutzkolloide in der Mikroverkapselung einer breiten Palette von wasserunlöslichen und/oder wasserlöslichen Wirkstoffen.

Gegenstand der Erfindung sind mikroverkapselte biologisch aktive Wirkstoffe enthaltend ein wasserlösliches oder wasserdispergierbares Kammpolymer, bestehend aus einer Polymerhauptkette und hiermit über Estergruppen verknüpften Polyesterseitenarmen, die Sulfonsäuregruppen tragen. Diese Kammpolymere dienen erfindungsgemäß als Schutzkolloide für die Polymeren, die die Kapselwand der mikroverkapselten Wirkstoffe bilden.

Die erfindungsgemäß eingesetzten Kammpolymeren sind aus EP-1 035 194 bekannt. Sie werden gemäß der Lehre dieses Standes der Technik als schmutzablösende Polymere in Waschmitteln eingesetzt.

Bevorzugt sind solche Kammpolymere, die erhalten werden durch Kondensation von
a) einer Polycarbonsäure oder einem Polyalkohol,
b) einem oder mehreren, gegebenenfalls durch Sulfogruppen substituierten aliphatischen, aromatischen, arylaliphatischen, polycyclischen oder cycloaliphatischen Alkohol mit mindestens zwei OH-Gruppen oder Polyglykolen der Formel HO-(XO)ₐ-(YO)_{c}-H, worin X und Y unabhängig voneinander eine Alkylengruppe mit 2 bis 22, vorzugsweise 2 bis 5 Kohlenstoffatomen und a und c eine Zahl von 0 bis 35, vorzugsweise 0 bis 5 bedeutet, wobei die Summe der Koeffizienten größer oder gleich 1 sein muss,
c) einer oder mehreren gegebenenfalls sulfonierten C₂-C₁₀-Dicarbonsäuren,
d) gegebenenfalls sogenannten AB-Monomeren, die auch sulfoniert sein können, basierend auf aliphatischen, aromatischen, arylaliphatischen, polycyclischen oder cycloaliphatischen Verbindungen, die in ihrer Struktur sowohl OH- als auch COOH Funktionalitäten vereinigen,
e) einer oder mehreren Verbindungen der Formeln NH₂R, NHR₂, ROH, R'COOH, HO(XO)_{b}-R, HO(CH₂CH₂)_{d}SO₃M worin R C₁-C₂₂-Alkyl oder C₆-C₁₀-Aryl, X C₂H₄ und/oder C₃H₇, b eine Zahl von 3 bis 40, vorzugsweise 3 bis 20, d eine Zahl von 1 bis 10, vorzugsweise 1 bis 4 und M ein Kation bedeuten sowie
f) gegebenenfalls eine oder mehrere siliziumenthaltende Verbindungen mit einer oder mehreren OH- und/oder COOH-Gruppen,
   wobei mindestens eine der unter b) bis e) genannten Struktureinheiten eine oder mehrere Sulfongruppen enthalten muss.

Die polymere Hauptkette der Kammpolymeren besteht bevorzugt aus polymeren aliphatischen, cycloaliphatischen oder aromatischen Polycarbonsäuren bzw. deren Derivaten wie beispielsweise Polyacrylsäure, Polymethacrylsäure, Polymaleinsäure, Polymaleinsäureanhydrid und Polynorbornensäure oder deren Ester mit aliphatischen, cycloaliphatischen oder aromatischen Alkoholen mit C₁-C₂₂. Die zahlenmittleren Molekulargewichte dieser Polycarbonsäuren können zwischen 1.000 und 2.000.000 g/mol liegen, wobei der Bereich von 2.000-100.000 g/mol bevorzugt ist.

Weiterhin kann die polymere Hauptkette bestehen aus einem polymeren aliphatischen, cycloaliphatischen oder aromatischen Polyalkohol, wie zum Beispiel Polyvinylalkohol oder Polynorbornylalkohol. Die zahlenmittleren Molekulargewichte dieser Polyalkohole können zwischen 1.000 und 2.000.000 g/mol liegen, wobei der Bereich von 2.000 bis 100.000 g/mol bevorzugt ist.

Zusätzlich können auch statische, alternierende oder blockartige Copolymere der beiden oben genannten Verbindungsklassen mit anderen vinylischen Monomeren wie beispielsweise Styrol, Acrylamid, α-Methylstyrol, Styrol, N-Vinylpyrrolidon, N-Vinylpyridin, N-Vinylformamid, N-Vinylcaprolacton, Vinylacetat oder Acrylamidopropylensulfonsäure, Vinylsulfonsäure, Vinylphosphonsäure und deren Alkali-, Erdalkali- und Ammoniumsalze verwendet werden.

Diese Polycarbonsäuren bzw. Polyalkohole werden umgesetzt mit einer Mischung der Komponenten b) bis d) wie oben definiert, wobei sich oligomere Polyesterseitenketten bilden. Als Komponente b) kommen infrage gegebenenfalls durch eine Sulfogruppe substituierte Polyalkohole aromatischer, aliphatischer oder cycloaliphatischer Natur wie oben definiert, beispielsweise Ethylenglykol, 1,2-Propandiol, 1,2-Butandiol, Polyalkylenglykole, 1,4-Butandiol, Natrium-1,2-dihydroxypropoxyethansulfonat, Glycerin, Pentaerythrit.

Die Komponente c) besteht aus mindestens difunktionellen aromatischen, aliphatischen und/oder cycloaliphatischen C₂-C₁₀-Dicarbonsäuren, wie beispielsweise Terephthalsäure, Isophthalsäure, Cyclohexandicarbonsäure, Bernsteinsäure, Adipinsäure, 2,6-Naphthalindicarbonsäure und gegebenenfalls sulfonierten aromatischen, aliphatischen oder cycloaliphatischen C₃-C₁₀-Dicarbonsäuren, beispielsweise Sulfobernsteinsäure oder 5-Sulfoisophthalsäure (oder deren Alkali- oder Erdalkalimetallsalze), 5-Sulfoisophthalsäuredimethylester-Na-Salz, oder deren Mischungen.

Zur Verbesserung der Wasserlöslichkeit liegt bei den Sulfogruppen enthaltenden Komponenten die Sulfogruppe vorzugsweise als Alkali-, Erdalkali- oder Ammonium-, Mono-, Di-, Tri- oder Tetra-alkyl- bzw. -hydroxyalkyl-ammoniumsalz vor, wobei eine Alkylgruppe 1 bis 22 C-Atome und die anderen Alkylgruppen ebenso wie die Hydroxyalkylgruppe 1 bis 4 C-Atome enthalten kann.

Als AB-Monomere kommen in Frage beispielsweise Hydroxycarbonsäuren, Lactone, ε-Caprolactam, Aminosäuren oder Aminoalkohole.

Komponente e) ist eine sogenannte Endcap-Gruppe. Als solche endständigen Gruppen kommen infrage:
aromatische, aliphatische oder cycloaliphatische Monoalkylamine oder Dialkylamine, wobei die Alkylgruppe 1 bis 22 C-Atome enthalten kann; aromatische, aliphatische oder cycloaliphatische Monocarbonsäuren mit 1 bis 200 C-Atomen bei den aliphatischen und 6 bis 10 C-Atomen bei den aromatischen bzw. cycloaliphatischen Monocarbonsäuren;
aliphatische Monoalkohole mit 1 bis 22 C-Atomen oder aromatische und cycloaliphatische Monoalkohole mit 6 bis 10 C-Atomen;
Polyalkoxyverbindungen der Formel HO(AO)ₓR, wobei A -C₂H₄- oder -C₃H₇-, x eine Zahl von 3 bis 40, vorzugsweise 3 bis 20 und R C₁-C₂₂-Alkyl bedeutet.

Als Komponente e) sind besonders bevorzugt sulfonierte Mono- oder Polyethylenglykole der Formel H(OCH₂CH₂)_{d}SO₃M, wobei d eine Zahl von 1 bis 10, vorzugsweise von 1 bis 4 und M ein Alkali- oder Erdalkalikation bedeutet. Die erfindungsgemäßen Kammpolymeren können alternativ auch frei von Komponenten gemäß e) sein.

Als silikonhaltige Komponenten f) kommen alle mindestens difunktionellen Silizium enthaltende Verbindungen in Frage, die unter den gewählten Polymerisationsbedingungen zur Polykondensation befähigt sind. Beispielsweise können difunktionalisierte Polydimethyisiloxane oder Diphenylsiloxane mit endständigen OH und/oder COOH-Gruppen vorteilhaft eingesetzt werden. Zudem ist auch die Verwendung oligomerer oder monomerer siliziumhaltiger Verbindungen möglich. Beispiele dafür sind Dihydroxydiphenylsiloxan, Dihydroxydimethylsiloxan. Weitere reaktive Derivate, wie Ester, Anhydride usw. der obig beschriebenen Verbindungen, sind ebenfalls im Sinne der Erfindung.

Die Kammpolymere bestehen vorzugsweise aus 0,1 bis 10 Gew.-% der Komponente a), 10 bis 80 Gew.-% der Komponente b), 10 bis 60 Gew.-% der Komponente c), 0 bis 50 Gew.-% der Komponente d), 0,1 bis 30 Gew.-% der Komponente e) und 0 bis 20 Gew.-% der Komponente f).

Die zahlenmittleren Molekulargewichte der Kammpolymere können vorteilhaft zwischen 2.000 und 2.000.000 g/mol, besonders vorteilhaft zwischen 2.000 und 100.000 g/mol liegen, wobei der Bereich von 2.000 - 30.000 g/mol bevorzugt Verwendung findet, ganz besonders vorteilhaft von 5.000 - 15.000 g/mol.

Die Synthese der Kammpolymere erfolgt nach an sich bekannten Verfahren; indem die Komponenten a) bis f) unter Zusatz eines Katalysators zunächst bei Normaldruck auf Temperaturen von 160 bis ca. 220°C erhitzt werden. Dann wird die Reaktion im Vakuum bei Temperaturen von 160 bis ca. 240°C unter Abdestillieren überschüssiger Glykole fortgesetzt. Für die Reaktion eignen sich die bekannten Umesterungs- und Kondensationskatalysatoren des Standes der Technik, wie beispielsweise Titantetraisopropylat, Dibutylzinnoxid oder Antimontrioxid/Calciumacetat. Bezüglich weiterer Einzelheiten zur Durchführung des Verfahrens wird auf EP 442 101 verwiesen.

Erfindungsgemäß werden diese Kammpolymere als Schutzkolloide in Mikroverkapselungsprozessen für biologisch aktive Wirkstoffe in den Gewichtsmengen von 1 bis 20 Gew.-%, bevorzugt 2 bis 10 Gew.-%, eingesetzt.

Die erfindungsgemäß eingesetzten Kammpolymeren können alleine oder in Kombination mit Emulgatoren eingesetzt werden.
Als nichtionogene Emulgatoren kommen in Betracht Anlagerungsprodukte von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Mono-, Di-und/oder Trialkylphenole mit 8 bis 15 C-Atomen in der Alkylgruppe; C₁₂-C₁₈-Fettsäuremono- und -diester von Anlagerungsprodukten von 1 bis 30 Mol Ethylenoxid an Glycerin, Glycerinmono- und -diester und Sorbitan-/Sorbitolmonound diester von gesättigten und ungesättigten Fettsäuren mit 6 bis 22 Kohlenstoffatomen und deren Ethylenoxidanlagerungsprodukte; Anlagerungsprodukte von 15 bis 60 Mol Ethylenoxid an Rizinusöl und/oder gehärtetes Rizinusöl, Polyol- und insbesondere Polyglycerinester, wie z.B. Polyglycerinpolyricinoleat und Polyglycerinpoly-12-hydroxystearat, Carbonsäureamide, beispielsweise Decancarbonsäure-dimethyl-amid, sowie hochmolekulare Siliconverbindungen, wie z.B. Dimethylpolysiloxane mit einem durchschnittlichen Molekulargewicht von 10.000 bis 50.000.
Ebenfalls geeignet sind Gemische von Verbindungen aus mehreren dieser Substanzklassen. Das Gewichtsverhältnis von Kammpolymer zu nichtionischem Emulgator kann 9 zu 1 bis 1 zu 9, bevorzugt 4 zu 1 bis 8 zu 1 betragen.

Ebenfalls geeignet als Emulgator sind Salze eines Schwefelsäurehalbesters eines gegebenenfalls alkoxylierten Alkohols, aber auch Alkali- und Ammoniumsalze von linearen oder verzweigten, gesättigten oder ungesättigten Alkylsulfaten mit 8 bis 22 Kohlenstoffatomen, von Alkylsulfonsäuren (Alkylrest: C₁₂-C₁₈) und von Alkylarylsulfonsäuren (Alkylrest: C₉ bis C₁₈), sowie Bis(phenolsulfonsäure)ether bzw. deren Alkali- oder Ammoniumsalze, die an einem oder beiden aromatischen Ringen eine C₄-C₂₄-Alkylgruppe tragen.

Erfindungsgemäß finden die sulfongruppenhaltigen Kammpolymere Verwendung als Schutzkolloide bei der Herstellung von Mikrokapselsuspensionen, deren Kapselwand aus Polyamid, Polyurethan, Polysulfonamide, Polyharnstoff, Polyester, Polyalkohol, Polyimin, Polycarbonat, Polystyrol, Polyacrylat, Polymethacrylat, Polysiloxan, Polyterephthalat, PVC, Harnstoff-Formaldehyd, Melaminformaldehyd, Melamin-Aminoplast, Glycoluryl, Aminoplast, Polyerythrolamid, Stärke, Pectin, Zellulose, Lectin, Dextrin bzw. Cyclodextrin, Gelatin, Agar-Agar, Gummi arabicum und Aminosäuren besteht.
Erfindungsgemäß eignen sich die sulfongruppenhaltigen Polyester als Schutzkolloide auch bei Mikroverkapselungsprozessen wasserunlöslicher sowie wasserlöslicher Wirkstoffe durch Grenzschichtpolymerisation ("in situ Polymerisation") von Polyaminen und Aldehyden, Harnstoff bzw. Harnstoffderivaten und Aldehyde, Isocyanaten, insbesondere Diisocyanate und Triisocyanate und Diamine bzw. Polyamine, insbesondere aliphatische und alicyclische primäre und sekundäre Amine, beispielsweise Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methylaminopropan, N-Methyl-bis-(3-aminopropyl)-amin, 1,4-Diamin-n-butan und 1,6-Diamino-n-hexan, Dialkohole, beispielsweise Ethandiol, Propandiol-(1,2), Propandiol-(1,3), Butandiol-(1,4), Pentandiol-(1,5), Hexandiol-(1,6), Glycerin und Diethylenglycol, Polyalkohole und/oder Aminoalkohole, beispielsweise Triethanolamin, sowie Diole und Polycarbonate.

Die erfindungsgemäß eingesetzten Schutzkolloide ermöglichen die Mikroverkapselung wasserunlöslicher bzw. wasserlöslicher Flüssigkeiten, niedrig schmelzender Feststoffe (M.P. < 80°C) oder in Öl bzw. Wasser gelöster fester Substanzen.
Die in den Mikrokapseln eingeschlossenen Wirkstoffe können Substanzen sein aus dem Bereich der biologisch aktiven Wirkstoffe, insbesondere aber agrochemische Mittel, wie fungizide, insektizide oder herbizide Wirkstoffe.

Bevorzugte fungizide Wirkstoffe sind dabei Amino-Derivate, wie 8-(1,1-Dimethylethyl)-Nethyl-N-propyl-1,4-dioxaspiro[4,5]decan-2-methamin (Spiroxamine) und Fenpropidin, sowie Morpholin-Derivate, wie Aldimorph, Dodemorph und Fenpropimorph. Als insektizide Wirkstoffe seien vorzugsweise genannt Azinphos-methyl, Azinphos-ethyl, Bromophos-A, Carbaryl, Chlorpyriphos, Chlorpyriphos M, Diazinon, Dichlorphos, Fenitrothion, Fonofos, Ediphenphos, Fenaminphos, Isofenphos, Malathion, Mesulfenphos, Methidathion, Parathion A, Parathion M, Permethrin, Pyrethrin, Pirimiphos, Profenofos, Pyraclophos, Tebupirimifos, Betacyfluthrin, Cyfluthrin, Cypermethrin, Transfluthrin, Lambdacyhalothrin. Als herbizide Wirkstoffe kommen in Betracht Alachlor, Acetochlor, Butachlor, Metazachlor, Metolachlor, Petrilachlor und Propachlor, Pendimethalin, Glyfosate, Atrazin, Paraquat.

Als Zusatzstoffe, die in den Mikrokapsel-Formulierungen enthalten sein können, kommen neben den erfindungsgemäß eingesetzten Kammpolymeren als Schutzkolloide und den bereits beschriebenen Emulgatoren, organische Solventien, Verdicker, Konservierungsmittel, Entschäumer, Puffer, Kältestabilisatoren und Neutralisationsmittel in Frage.
Als organische Solventien eignen sich alle üblichen organischen Lösungsmittel, die einerseits mit Wasser wenig mischbar sind, andererseits aber die eingesetzten Wirkstoffe gut lösen bzw. eine geeignete kontinuierliche Phase bilden.
Vorzugsweise genannt seien aliphatische und aromatische Kohlenwasserstoffe, gegebenenfalls halogenierte Kohlenwasserstoffe, wie Toluol, Xylol, Tetrachlormethan, Chloroform, Methylenchlorid, Dichlorethan, Ester einschließlich Ethylacetat. Als Verdicker können alle üblichen für diesen Zweck einsetzbare Stoffe, insbesondere Kelzan (thixotropes Verdickungsmittel auf Xanthan-Basis), Kieselsäuren und Attapulgit verwendet werden.
Als Konservierungsmittel eignen sich beispielsweise Preventol und Proxef, als Entschäumer beispielsweise Silan-Derivate, wie Polydimethylsiloxane und Magnesiumstearat. Als Kältestabilisatoren können alle üblichen für diesen Zweck einsetzbaren Stoffe fungieren. Beispielhaft seien Harnstoff, Glycerin und Propylenglykol genannt.

Als Puffer kommen alle üblichen Säuren und deren Salze in Frage. Vorzugsweise genannt seien Phosphatpuffer, Carbonatpuffer, Zitratpuffer.

Die folgenden Beispiele sollen den Gegenstand der Erfindung näher erläutern, ohne ihn darauf einzuschränken.

### Beispiel

Eine Mischung aus 158,9 g Tebupirimphos, 3,03 g Toluenediisocyanat und 3,5 g 2 H-1,3,5-Oxadiazin-3,4,6-(3H,5H)-trion-3,5-bis-(6-isocyanato-hex-1-yl) wird bei 9 bis 11°C bei 8000 Upm in 245,5 g einer 1 gew.-%igen Lösung von Polyester in Wasser im Gemisch mit 0,1 g eines Silikonentschäumers dispergiert. Danach werden 3,6 g einer 50 gew.-%igen Lösung von Diethylentriamin in Wasser zugegeben. Das dabei entstehende Reaktionsgemisch wird innerhalb von 2 Stunden auf 70°C aufgeheizt und dann unter langsamem Rühren weitere 4 Stunden auf 70°C gehalten. Nach dem abschließenden Abkühlen auf Raumtemperatur werden 500 g einer 2 gew.-%igen Lösung von Kelzan (Verdicker auf Xanthan-Basis) in Wasser zugefügt.

Der als Schutzkolloid eingesetzte Polyester wurde hergestellt durch Kondensation der folgenden Monomeren:

| | |
|---|---|
| 5-Natriumsulfoisophthalsäuredimethylester | 400 mmol |
| Isophthalsäure | 1600 mmol |
| Diethylenglykol | 1049 mmol |
| 1,2-Propandiol | 2568 mmol |
| Sulfonatgruppenhaltiges Glycol | 74 mmol |
| Polyacrylsäure | 3 g |
| Triethylenglykol | 1049 mmol |

Weitere Beispiele für erfindungsgemäß benutzte Sulfogruppen enthaltende Kammpolymere sind in der folgenden Tabelle zusammengefasst:

| SIM | IPA | DEG | PG | PA | SE 1 | 1,3 PG | TEG | CHDC | Gly | CHDM |
|---|---|---|---|---|---|---|---|---|---|---|
| 249 | 1749 | 4196 | 0 | 3,0 | 37 | 0 | 0 | 0 | 0 | 0 |
| 400 | 1600 | 1575 | 0 | 3,0 | 100 | 2568 | 0 | 0 | 0 | 0 |
| 400 | 1600 | 2098 | 0 | 3,0 | 100 | 2568 | 0 | 0 | 0 | 0 |
| 400 | 1600 | 1049 | 2568 | 3,0 | 74 | 0 | 1049 | 0 | 0 | 0 |
| 450 | 400 | 500 | 2000 | 3,0 | 74 | 0 | 0 | 1200 | 150 | 400 |
| 400 | 800 | 1575 | 2068 | 3,0 | 74 | 0 | 0 | 800 | 60 | 0 |
| SIM = 3-Natriumsulfoisophthalsäuredimethylester | | | | | | | | | | |
| IPA = Isophthalsäure | | | | | | | | | | |
| PG= 1,2-Propandiol | | | | | | | | | | |
| DEG = Diethylenglykol | | | | | | | | | | |
| SE 1 = Sulfonatgruppenhaltiges Glykol | | | | | | | | | | |
| PA = Polyacrylsäure | | | | | | | | | | |
| 1,3-PG = 1,3-Propylenglykol | | | | | | | | | | |
| TEG = Triethylenglykol | | | | | | | | | | |
| CHDC = 1,4-Cyclohexandicarbonsäure | | | | | | | | | | |
| Gly = Glycerin | | | | | | | | | | |
| CHDM = 1,4-Cyclohexandimethanol | | | | | | | | | | |

alle Zahlen bedeuten mmol, die Angaben für PA sind in Gramm.

## Patentansprüche

1. Mikroverkapselte biologisch aktive Wirkstoffe enthaltend ein wasserlösliches oder wasserdispergierbares Kammpolymer, bestehend aus einer Polymerhauptkette und hiermit über Estergruppen verknüpften Polyesterseitenarmen, die Sulfosäuregruppen tragen.

2. Mikroverkapselte biologisch aktive Wirkstoffe nach Anspruch 1, enthaltend ein Kammpolymer, erhältlich durch Kondensation
a) einer Polycarbonsäure oder einem Polyalkohol,
b) einem oder mehreren, gegebenenfalls durch Sulfogruppen substituierten aliphatischen, aromatischen, araliphatischen, polycyclischen oder cycloaliphatischen Alkohol mit mindestens zwei OH-Gruppen oder Polyglykolen der Formel HO-(XO)ₐ-(YO)_{c}-H, worin X und Y unabhängig voneinander eine Alkylengruppe mit 2 bis 22, vorzugsweise 2 bis 5 Kohlenstoffatomen und a und c eine Zahl von 0 bis 35, vorzugsweise 0 bis 5 bedeutet, wobei die Summe der Koeffizienten größer oder gleich 1 sein muss,
c) einer oder mehreren gegebenenfalls sulfonierten C₂-C₁₀-Dicarbonsäuren,
d) gegebenenfalls sogenannten AB-Monomeren, die auch sulfoniert sein können, basierend auf aliphatischen, aromatischen, arylaliphatischen, polycyclischen oder cycloaliphatischen Verbindungen, die in ihrer Struktur sowohl OH- als auch COOH Funktionalitäten vereinigen,
e) einer oder mehreren Verbindungen der Formeln NH₂R, NHR₂, ROH, R'COOH, HO(XO)_{b}-R, HO(CH₂CH₂)_{d}SO₃M worin R C₁-C₂₂-Alkyl oder C₆-C₁₀-Aryl, X C₂H₄ und/oder C₃H₇, b eine Zahl von 3 bis 40, vorzugsweise 3 bis 20, d eine Zahl von 1 bis 10, vorzugsweise 1 bis 4 und M ein Kation bedeuten sowie
f) gegebenenfalls eine oder mehrere siliziumenthaltende Verbindungen mit einer oder mehreren OH- und/oder COOH-Gruppen,
wobei mindestens eine der unter b) bis e) genannten Struktureinheiten eine oder mehrere Sulfongruppen enthalten muss.

3. Mikroverkapselte, biologisch aktive Wirkstoffe nach Anspruch 1, enthaltend ein Kammpolymer, erhältlich durch Kondensation von 0,1 bis 10 Gew.-% der Komponente a), 10 bis 80 Gew.-% der Komponente b), 10 bis 60 Gew.-% der Komponente c), 0 bis 50 Gew.-% der Komponente d), 0,1 bis 30 Gew.-% der Komponente e) und 0 bis 20 Gew.-% der Komponente f).

4. Mikroverkapselte, biologisch aktive Wirkstoffe nach Anspruch 1, enthaltend ein Kammpolymer dessen Polymerhauptkette Polyacrylsäure, Polymethacrylsäure, Polymaleinsäure, Polymaleinsäureanhydrid, Polynorbornensäure oder deren C₁-C₂₂-Ester, Polyvinylalkohol oder Polynorbornylalkohol ist.

5. Mikroverkapselte, biologisch aktive Wirkstoffe nach Anspruch 1, enthaltend ein Kammpolymer dessen Polymerseitengruppen Terephthalsäure, Isophthalsäure, Cyclohexandicarbonsäure, Bernsteinsäure, Adipinsäure, 2,6-Naphthalin-dicarbonsäure, Sulfobernsteinsäure oder 5-Sulfoisophthalsäure enthalten.

## Claims

1. A microencapsulated biologically active compound, comprising a watersoluble or water-dispersible comb polymer consisting of a main polymer chain and polyester side arms which carry sulfonic acid groups and are attached to the main polymer chain via ester groups.

2. A microencapsulated biologically active compound as claimed in claim 1, comprising a comb polymer obtainable by condensation
a) of a polycarboxylic acid or a polyalcohol,
b) of one or more unsubstituted or sulfo-substituted aliphatic, aromatic, araliphatic, polycyclic or cycloaliphatic alcohols having at least two OH groups or polyglycols of the formula HO-(XO)ₐ-(YO)_{c}-H, in which X and Y independently of one another are an alkylene group having 2 to 22, preferably 2 to 5, carbon atoms and a and c are numbers from 0 to 35, preferably from 0 to 5, where the sum of the coefficients has to be greater than or equal to 1,
c) of one or more unsubstituted or sulfonated C₂-C₁₀-dicarboxylic acids,
d) if appropriate, of "AB monomers", which may also be sulfonated, based on aliphatic, aromatic, araliphatic, polycyclic or cycloaliphatic compounds which combine in their structure both OH and COOH functionalities,
e) of one or more compounds of the formulae NH₂R, NHR₂, ROH, R'COOH, HO(XO)_{b}-R, HO(CH₂CH₂)_{d}SO₃M in which R is C₁-C₂₂-alkyl or C₆-C₁₀-aryl, X is C₂H₄ and/or C₃H₇, b is a number from 3 to 40, preferably from 3 to 20, d is a number from 1 to 10, preferably from 1 to 4, and M is a cation, and also
f) if appropriate, of one or more silicon-containing compounds having one or more OH and/or COOH groups,
where at least one of the structural units mentioned under b) to e) must contain one or more sulfone groups.

3. A microencapsulated biologically active compound as claimed in claim 1, comprising a comb polymer obtainable by condensation of from 0.1 to 10% by weight of component a), from 10 to 80% by weight of component b), from 10 to 60% by weight of component c), from 0 to 50% by weight of compound d), from 0.1 to 30% by weight of component e) and from 0 to 20% by weight of component f).

4. A microencapsulated biologically active compound as claimed in claim 1, comprising a comb polymer whose main polymer chain is polyacrylic acid, polymethacrylic acid, polymaleic acid, polymaleic anhydride, polynorbomenic acid or C₁-C₂₂-esters thereof, polyvinyl alcohol or polynorbomyl alcohol.

5. A microencapsulated biologically active compound as claimed in claim 1, comprising a comb polymer whose polymer side groups contain terephthalic acid, isophthalic acid, cyclohexanedicarboxylic acid, succinic acid, adipic acid, 2,6-naphthalene dicarboxylic acid, sulfosuccinic acid or 5-sulfoisophthalic acid.

## Revendications

1. Matières biologiquement actives microencapsulées contenant un polymère en peigne soluble ou dispersible dans l'eau, constitué d'une chaîne principale polymère et de ramifications latérales polyester, qui y sont reliées par des groupes esters, et qui portent des groupes acide sulfonique.

2. Matières biologiquement actives microencapsulées selon la revendication 1, contenant un polymère en peigne pouvant être obtenu par condensation
a) d'un acide polycarboxylique ou d'un polyalcool,
b) d'un ou plusieurs alcools aliphatiques, aromatiques, arylaliphatiques, polycycliques ou cycloaliphatiques, éventuellement substitués par des groupes sulfo, ayant au moins deux groupes OH, ou un ou plusieurs polyglycols de formule HO-(XO)ₐ-(YO)_{c}-H dans laquelle X et Y représentent chacun indépendamment de l'autre un groupe alkylène ayant de 2 à 22 et de préférence de 2 à 5 atomes de carbone, et a et c représentent chacun un nombre de 0 à 35, de préférence de 0 à 5, la somme des coefficients devant être supérieure ou égale à 1,
c) d'un ou plusieurs acides dicarboxyliques en C₂-C₁₀ éventuellement sulfonés,
d) éventuellement de ce que l'on appelle des monomères AB, qui peuvent aussi être sulfonés, à base de composés aliphatiques, aromatiques, arylaliphatiques, polycycliques ou cycloaliphatiques, qui dans leur structure combinent des fonctionnalisés tant OH que COOH,
e) d'un plusieurs composés de formules NH₂R, NHR₂, ROH, R'COOH, HO(XO)_{b}-R, HO(CH₂CH₂)_{d}SO₃M dans lesquels R est un groupe alkyle en C₁-C₂₂ ou aryle en C₆-C₁₀, X est C₂H₄ et/ou C₃H₇, b est un nombre de 3 à 40, de préférence de 3 à 20, d est un nombre de 1 à 10 et de préférence de 1 à 4, et M est un cation, et
f) éventuellement d'un ou plusieurs composés du silicium, comportant un ou plusieurs groupes OH et/ou COOH,
au moins l'un des motifs structuraux mentionnés en b) à
e) devant contenir un ou plusieurs groupes acide sulfonique.

3. Matières biologiquement actives microencapsulées selon la revendication 1, contenant un polymère en peigne pouvant être obtenu par condensation de 0,1 à 10 % en poids du composant a), de 10 à 80 % en poids du composant b), de 10 à 60 % en poids du composant c), de 0 à 50 % en poids du composant d), de 0,1 à 30 % en poids du composant e) et de 0 à 20 % en poids du composant f).

4. Matières biologiquement actives microencapsulées selon la revendication 1, contenant un polymère en peigne dont la chaîne principale polymère est constituée de poly(acide acrylique), de poly(acide méthacrylique), de poly(acide maléique), de poly(anhydride maléique), de poly(acide du norbornène) ou de leurs esters en C₁-C₂₂, de poly(alcool vinylique) ou de poly(alcool norbornylique).

5. Matières biologiquement actives microencapsulées selon la revendication 1, contenant un polymère en peigne dont les groupes latéraux polymères contiennent de l'acide téréphtalique, de l'acide isophtalique, de l'acide cyclohexanedicarboxylique, de l'acide succinique, de l'acide adipique, de l'acide 2,6-naphtalènedicarboxylique, de l'acide sulfosuccinique ou de l'acide 5-sulfoisophtalique.
